# EUROPEAN PATENT SPECIFICATION

(11) **EP 3 812 252 B1**
(45) Date of publication and mention of the grant of the patent: **19.01.2022**
(21) Application number: 20200431.3
(22) Date of filing: 07.10.2020
(51) Int. Cl.: B60L 50/60, B60Q 1/00, B60Q 1/50, B60L 53/16, B62J 17/02, B62J 6/026, B62J 9/12, B62J 43/16

(54) **LIGHT FOR LID OF CHARGING CONNECTOR OF ELECTRIC SADDLED VEHICLE**
LICHT FÜR DEN DECKEL DES LADEGERÄTS EINES ELEKTRISCHES SATTELFAHRZEUG
ÉCLAIRAGE DU COUVERCLE DU CONNECTEUR DE CHARGE D'UN VÉHICULE ÉLECTRIQUE À SELLE

(30) Priority: 21.10.2019 JP 2019192187
(43) Date of publication of application: 28.04.2021
(73) Proprietor: YAMAHA HATSUDOKI KABUSHIKI KAISHA, Iwata-shi Shizuoka 438-8501 (JP)
(72) Inventor: MORII, Yasuhiro, Iwata-shi, Shizuoka, 438-8501 (JP)
(74) Representative: Grünecker Patent- und Rechtsanwälte PartG mbB

(56) References cited:
- EP-A1- 3 424 765
- WO-A1-2019/012706
- WO-A1-2019/155496
- CN-Y- 2 534 306
- JP-A- 2012 176 695
- US-A1- 2018 216 973

## Description

The present invention relates to an electric saddled vehicle.

JP 2012-176695 A discloses an electric motorcycle having a front cowl with an aperture, which is closable with a lid member and has a cable therein. The front cowl is equipped with various lights.

Further relevant documents are the WO 2019/155496 A1, disclosing the features of the preamble of claim 1 and US 2018/216973 A1, JP 2012 176695 A, WO 2019/012706 A1, CN 2 534 306 Y and EP 3 424 765 A1.

The lid member may be non-rectangular for reasons of design or structure. Such a lid member has a wider portion and a narrower portion from side to side. Due to the front cowl being small, ordinary lights need to be positioned on the right and left of the narrower portion of the lid member.

It is the object of the present invention to provide an electric saddled vehicle that allows improving design flexibility. According to the present invention said object is solved by an electric saddled vehicle having the figures of independent claim 1. Preferred embodiments are laid down in the dependent claims.

(1) An electric saddled vehicle includes: a drive motor; a battery for supplying power to the drive motor; a charge connector for charging the battery; a front cowl in which the charge connector is disposed, the front cowl having an inclined area that slopes down forward in an external surface, the front cowl having an aperture in the inclined area; a lid attached to the front cowl to allow opening and closing of the aperture, the lid having an outer shape with a pair of outer edges spaced in a vehicle width direction with the aperture closed, the pair of outer edges including a pair of separated outer ends farthest in the vehicle width direction, the pair of outer edges including a pair of outer lower inclined sections closer to each other at respective points lower from the pair of separated outer ends; and a light having a light-emitting surface in the inclined area of the front cowl, the light-emitting surface having an outer shape with a pair of inner edges opposed to the pair of outer edges, the pair of inner edges including a pair of separated inner ends farthest in the vehicle width direction, the pair of inner edges including a pair of inner lower inclined sections closer to each other at respective points lower from the pair of separated inner ends.

Thus, the light-emitting surface can be closer to the lid, thereby improving design flexibility.

(2) In the electric saddled vehicle according to (1), the pair of outer edges of the lid may be a pair of protruding edges convex in an outward direction, and the pair of inner edges of the light-emitting surface may be a pair of depressed edges concave in the outward direction.

(3) In the electric saddled vehicle according to (1) or (2), the lid may overlap with a line segment between a top point and a bottom point of each of the pair of inner edges.

(4) In the electric saddled vehicle according to any one of (1) to (3), the light-emitting surface may include a first light-emitting surface and a second light-emitting surface separated from each other, and the pair of inner edges may be a first inner edge of the first light-emitting surface and a second inner edge of the second light-emitting surface.

(5) In the electric saddled vehicle according to any one of (1) to (3), the outer shape of the light-emitting surface may be a continuously integrated shape surrounding the lid laterally beside and under the lid.

(6) In the electric saddled vehicle according to any one of (1) to (5), the pair of inner edges of the light-emitting surface may include a pair of inner upper inclined sections closer to each other at respective points higher from the pair of separated inner ends.

(7) In the electric saddled vehicle according to (6), each of the pair of inner upper inclined sections of the light-emitting surface may have a top point lower than the highest portion of the lid.

(8) In the electric saddled vehicle according to (6), each of the pair of inner upper inclined sections of the light-emitting surface may have a top point higher than the highest portion of the lid.

(9) In the electric saddled vehicle according to any one of (1) to (8), the pair of outer edges of the lid may include a pair of outer upper inclined sections closer to each other at respective points higher from the pair of separated outer ends.

(10) In the electric saddled vehicle according to any one of (1) to (9), the light may be a daytime running light.

(11) In the electric saddled vehicle according to any one of (1) to (10), the lid may be capable of remote operation of being locked and unlocked.

(12) In the electric saddled vehicle according to any one of (1) to (11), the light may be configured to be on or blink during a predetermined period including time of charging the battery.

### BRIEF DESCRIPTION OF THE DRAWINGS

FIG. 1 is an overall perspective view of an electric saddled vehicle in a first embodiment.
FIG. 2 is an internal structure diagram of the electric saddled vehicle in FIG. 1.
FIG. 3 is a partial view of an external surface of a front cowl.
FIG. 4 is a partial view of an external surface of a front cowl in a second embodiment.

### DETAILED DESCRIPTION

The embodiment(s) of the present teaching is (are) described below with reference to the drawings. However, the present teaching can be implemented in various ways to the extent that it does not deviate from the main point of view, and is not to be construed as being limited to the description of the embodiment(s) exemplified below.

### [FIRST EMBODIMENT]

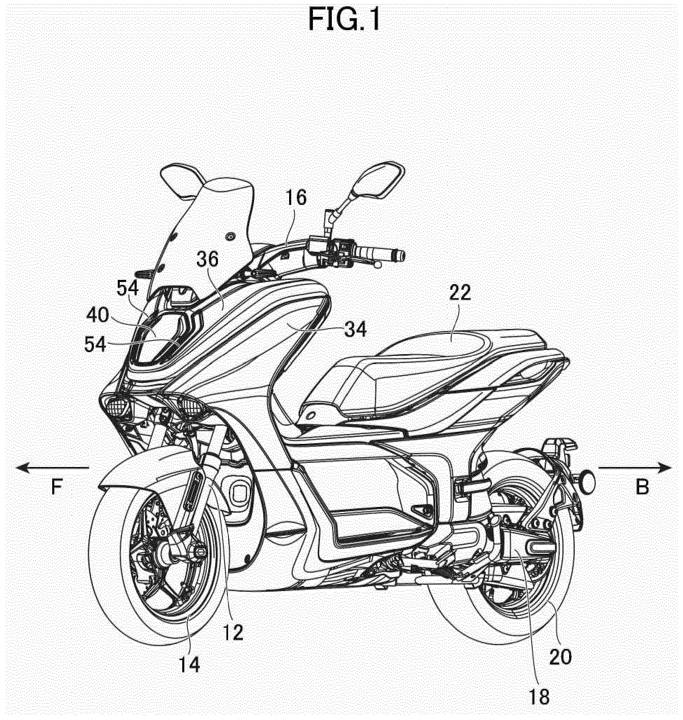

FIG. 1 is an overall perspective view of an electric saddled vehicle in a first embodiment. The electric saddled vehicle is an electric motorcycle with any number of wheels. The electric saddled vehicle may be a four-wheel vehicle for driving on irregular terrain. The electric saddled vehicle may be an on-road type, an off-road type, or a scooter type.

In the embodiment, a direction is based on a straight forward direction of the electric saddled vehicle. For example, arrows F and B in FIG. 1 represent a forward direction and a backward direction. Upper and lower directions are based on the forward direction, and right and left directions are based on the forward direction.

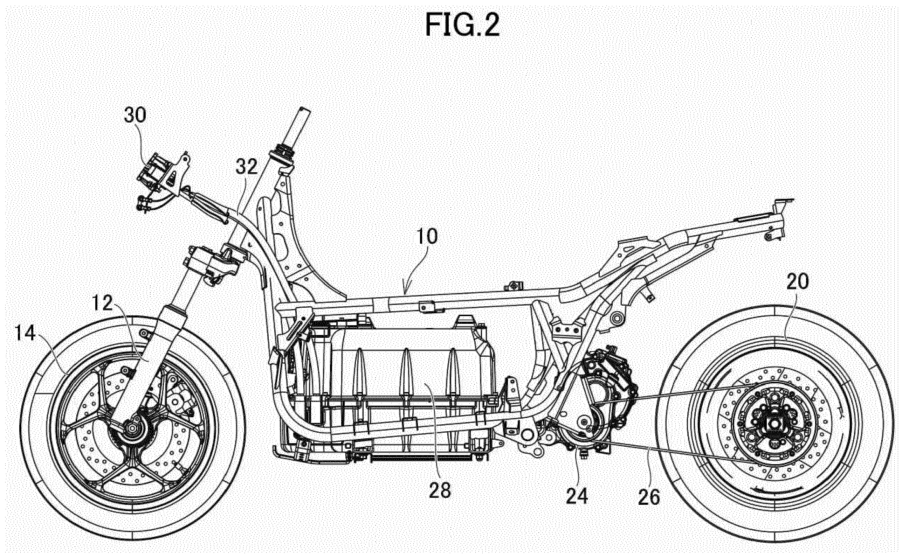

FIG. 2 is an internal structure diagram of the electric saddled vehicle in FIG. 1. The electric saddled vehicle has a vehicle body frame 10. A front fork 12 is supported at a front end of the vehicle body frame 10 and is rotatable in the right and left directions. A front wheel 14 is rotatably supported at a bottom end of the front fork 12. A handle 16 (FIG. 1) is disposed on a top end of the front fork 12 for steering. A rear unit 18 is supported at a lower rear portion of the vehicle body frame 10 and is swingable in the upper and lower directions. A rear wheel 20 is rotatably supported at a rear end of the rear unit 18. A seat 22 (FIG. 1) for a driver to sit is disposed at an upper rear portion of the vehicle body frame 10.

The electric saddled vehicle has a drive motor 24 for driving a rear wheel 20 of a driving wheel. The drive motor 24 may be a three-phase alternating-current motor. The drive motor 24 is supported by the vehicle body frame 10. The drive motor 24 transmits driving force to the rear wheel 20 through a transmission member such as a belt 26. Alternatively, the drive motor 24 may drive the front wheel 14, or drive both the front wheel 14 and the rear wheel 20.

The electric saddled vehicle has a battery 28 for storing power to be supplied to a drive motor 24. The battery 28 may be a lithium-ion battery. The battery 28 is positioned under the seat 22. The charge connector 30 is electrically connected to the battery 28 through a cable 32. For charging, a power supply plug (not shown) is inserted into the charge connector 30.

In FIG. 1, the electric saddled vehicle has a front cowl 34. The front cowl 34 is provided at the front end of vehicle body frame 10 (FIG. 2), extending along a vehicle width direction (right and left direction), extending in the upper and lower directions. The charge connector 30 (FIG. 2) is disposed inside the front cowl 34. The front cowl 34 has an inclined area 36 that slopes down forward in an external surface.

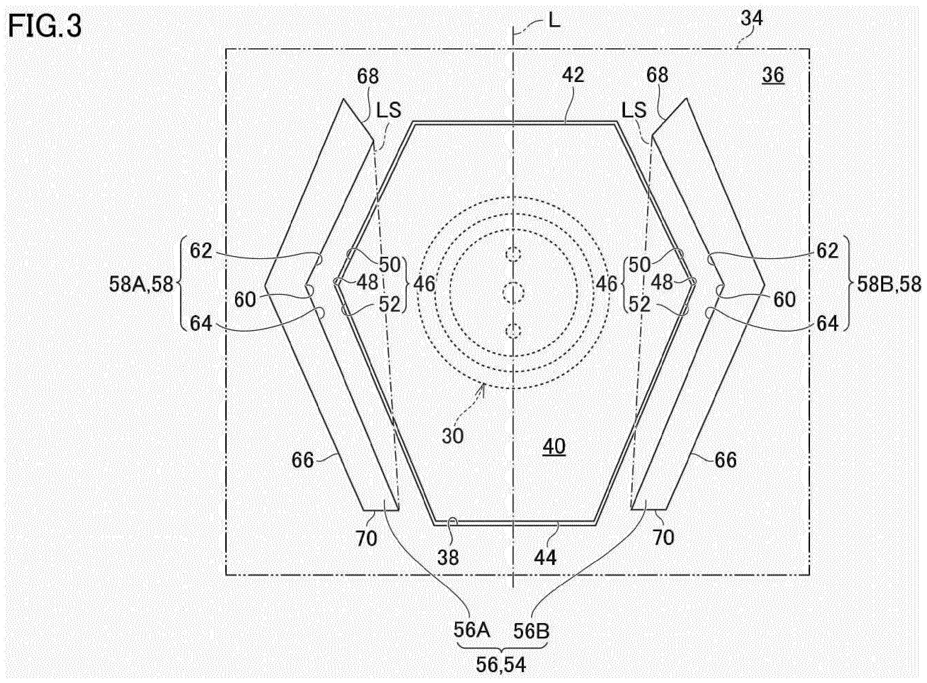

FIG. 3 is a partial view of an external surface of a front cowl 34. The front cowl 34 has an aperture 38 in the inclined area 36. The charge connector 30 is disposed inside the aperture 38.

### [LID]

The electric saddled vehicle has a lid 40. In the embodiment, the lid 40 is a charging lid and covers the charge connector 30. The lid 40 may be for a storage box. The lid 40 is attached to the front cowl 34. The lid 40 enables opening and closing of the aperture 38 of the front cowl 34. In an example in FIG. 3, the lid 40 is smaller than the aperture 38, the lid 40 is positioned inside the aperture 38, and a periphery of the aperture 38 is opposed to a periphery of the lid 40. The lid 40 may be modified to be larger than the aperture 38. Such a lid 40 is situated to have an outer edge covering the periphery of the aperture 38. The lid 40 may enable remote operation of locking and unlocking. For example, there may be a button next to an unillustrated ignition key, which, when pressed, may cause the lid 40 to open.

The lid 40 in FIG. 3 is hexagonal in shape. The hexagon may have rounded corners. The lid 40 has an upper edge 42 and a lower edge 44 on both sides in the upper and lower directions. The upper edge 42 and the lower edge 44 are parallel to the vehicle width direction. The upper edge 42 and the lower edge 44 may be a straight line or a curve. The curve may be convex or concave outward. The upper edge 42 and the lower edge 44 are of the same or different length. In the example in FIG. 3, the lower edge 44 is shorter than the upper edge 42. The lower edge 44 may be longer than the upper edge 42.

### [A PAIR OF OUTER EDGES]

The outer shape of the lid 40, with the aperture 38 closed, has a pair of outer edges 46 spaced in the vehicle width direction. The pair of outer edges 46 are positioned to sandwich the upper edge 42 and the lower edge 44. An inner angle between the outer edge 46 and each of the upper edge 42 and the lower edge 44 is an obtuse angle. Thus, the pair of outer edges 46 are a pair of protruding edges convex in an outward direction (direction to be spaced along the vehicle width direction). The outer edge 46 may include a straight line or may be a whole curve. The pair of outer edges 46 are line-symmetric with respect to a line L being perpendicular to the vehicle width direction and passing through a center (center in the vehicle width direction) of the lid 40.

### [A PAIR OF SEPARATED OUTER ENDS]

The pair of outer edges 46 include a pair of separated outer ends 48 farthest to each other in the vehicle width direction. The separated outer ends 48 are at respective vertexes of protruding edges. The lid 40 is widest in the vehicle width direction between the pair of separated outer ends 48. The pair of separated outer ends 48 may be closer to the upper edge 42 than the lower edge 44, in FIG. 3, may be equal in distance from the upper edge 42 and the lower edge 44, or may be closer to the lower edge 44 than the upper edge 42. The pair of separated outer ends 48 are equal in distance from the center (center of the vehicle width direction) of the lid 40.

### [A PAIR OF OUTER UPPER INCLINED SECTIONS]

The pair of outer edges 46 include a pair of outer upper inclined sections 50. The pair of outer upper inclined sections 50 are closer to each other at respective points higher from the pair of separated outer ends 48. The outer upper inclined section 50 may be a straight line or a curve. The pair of outer upper inclined sections 50 are line-symmetric with respect to the line L being perpendicular to the vehicle width direction and passing through the center (center of the vehicle width direction) of the lid 40.

### [A PAIR OF OUTER LOWER INCLINED SECTIONS]

The pair of outer edges 46 include a pair of outer lower inclined sections 52. The pair of outer lower inclined sections 52 are closer to each other at respective points lower from the pair of separated outer ends 48. The outer lower inclined section 52 may be a straight line or a curve. The pair of outer lower inclined sections 52 are line-symmetric with respect to the line L being perpendicular to the vehicle width direction and passing through the center (center of the vehicle width direction) of the lid 40.

### [LIGHT]

The electric saddled vehicle has a light 54. The light 54 is a daytime running light. The light 54 is configured to be on or blink during a predetermined period including time of charging the battery 28 in FIG. 2. The light 54 has a light-emitting surface 56 in the inclined area 36 of the front cowl 34. The light-emitting surface 56 includes a first light-emitting surface 56A and a second light-emitting surface 56B. The first light-emitting surface 56A and the second light-emitting surface 56B are separated from each other. The first light-emitting surface 56A and the second light-emitting surface 56B are line-symmetric with respect to the line L being perpendicular to the vehicle width direction and passing through the center (center of the vehicle width direction) of the lid 40.

### [A PAIR OF INNER EDGES]

The outer shape of the light-emitting surface 56 has a pair of inner edges 58 opposed to the pair of respective outer edges 46. The pair of inner edges 58 are a first inner edge 58A of the first light-emitting surface 56A and a second inner edge 58B of the second light-emitting surface 56B. The pair of inner edges 58 are a pair of depressed edges concave outward. The lid 40 overlaps with a line segment LS between a top point and a bottom point of each inner edge 58. The inner edge 58 may include a straight line or may be a whole curve. The pair of inner edges 58 are line-symmetric with respect to the line L being perpendicular to the vehicle width direction and passing through the center (center of the vehicle width direction) of the lid 40.

### [A PAIR OF SEPARATED INNER ENDS]

The pair of inner edges 58 include a pair of separated inner ends 60 farthest to each other in the vehicle width direction. The separated inner end 60 is deepest in the depressed edge. In FIG. 3, the pair of separated inner ends 60 may be closer to a top point of the inner edge 58 than a bottom point of the inner edge 58, may be equal in distance from the bottom point and the top point of the inner edge 58, or may be closer to the bottom point of the inner edge 58 than the top point of the inner edge 58. The pair of separated inner ends 60 are equal in distance from the center (center of the vehicle width direction) of the lid 40.

### [A PAIR OF INNER UPPER INCLINED SECTIONS]

The pair of inner edges 58 include a pair of inner upper inclined sections 62. The pair of inner upper inclined sections 62 are closer to each other at respective points higher from the pair of separated inner ends 60. The inner upper inclined section 62 is opposed to, may be parallel to, or may be non-parallel to the outer upper inclined section 50 of the lid 40. The top point of the inner upper inclined section 62 is lower than the highest portion of the lid 40.

### [A PAIR OF INNER LOWER INCLINED SECTIONS]

The pair of inner edges 58 include a pair of inner lower inclined sections 64. The pair of inner lower inclined sections 64 are closer to each other at respective points lower from the pair of separated inner ends 60. The inner lower inclined section 64 is opposed to, may be parallel to, or may be non-parallel to the outer lower inclined section 52 of the lid 40. The bottom point of the inner upper inclined section 62 is higher than the lowest part of the lid 40.

In the embodiment, the light-emitting surface 56 can be closer to the lid 40, improving design flexibility.

The outer shape of the light-emitting surface 56 (whole of the first light-emitting surface 56A and the second light-emitting surface 56B) has a pair of second outer edges 66 besides the pair of inner edges 58. Each of the pair of second outer edges 66 has a shape compatible with a corresponding one of the pair of inner edges 58. Specifically, the second outer edge 66 is in shape along the inner upper inclined section 62 and the inner lower inclined section 64 of the inner edge 58 (e.g. a parallel edge). The pair of second outer edges 66 are a pair of protruding edges convex outward (direction away along the vehicle width direction), in response to the pair of outer edges 46 of the lid 40.

The top point of the second outer edge 66 is higher than the highest portion of the lid 40. A second upper edge 68 connecting the inner edge 58 and the second outer edge 66 slopes upward and outward (direction away along the vehicle width direction). The bottom point of the second outer edge 66 is higher than the lowest part of the lid 40. A second lower edge 70 connecting the inner edge 58 and the second outer edge 66 is parallel to the lower edge 44 of the lid 40.

### [SECOND EMBODIMENT]

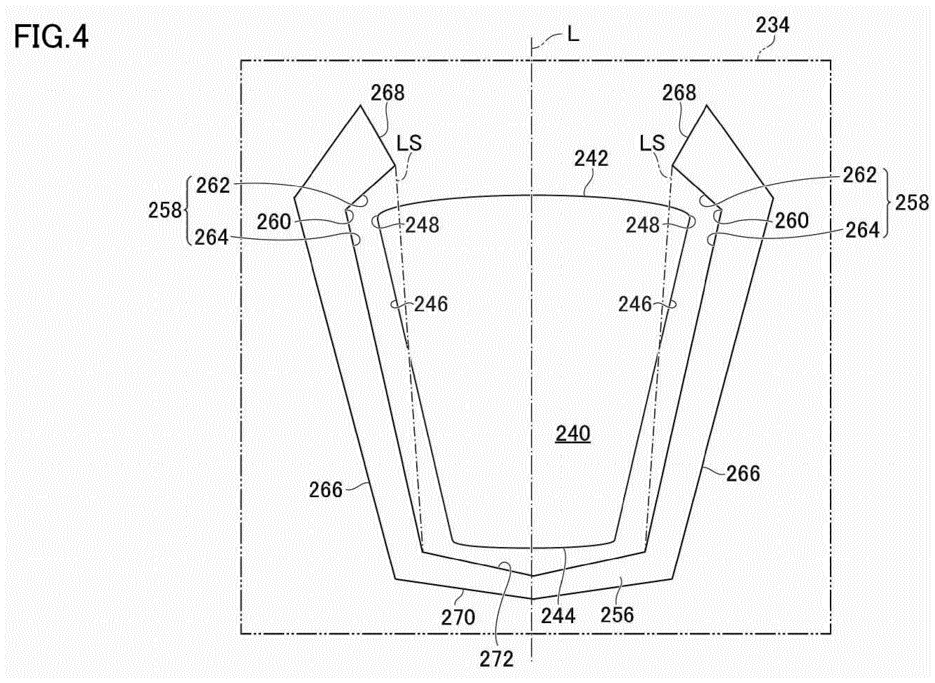

FIG. 4 is a partial view of an external surface of a front cowl in a second embodiment.

### [LID]

A pair of outer edges 246 of a lid 240 include a pair of respective separated outer ends 248 that are highest. The pair of outer edges 246 are closer to each other at respective points lower from the pair of separated outer ends 248. The upper edge 242 and the lower edge 244 curve to be convex outward.

### [LIGHT]

The outer shape of the light-emitting surface 256 has an integrated shape continuously surrounding the lid 240 and being laterally beside and under the lid 240. In FIG. 4, the light-emitting surface 256 avoids being above the lid 240.

### [A PAIR OF INNER EDGES]

The outer shape of the light-emitting surface 256 has a pair of inner edges 258. The pair of inner edges 258 are a pair of depressed edges that are concave outward. The lid 240 overlaps with a line segment LS between the top point and the bottom point of each of the pair of inner edges 258. The inner edge 258 may include a straight line or may be a whole curve. The pair of inner edges 258 are line-symmetric with respect to the line L being perpendicular to the vehicle width direction and passing through the center (center of the vehicle width direction) of the lid 240.

### [A PAIR OF SEPARATED INNER ENDS]

The pair of inner edges 258 include a pair of separated inner ends 260 that are farthest to each other in the vehicle width direction. The separated inner end 260 is deepest in a depressed edge. The pair of separated inner ends 260 are opposed to the pair of separated outer ends 248 of the lid 240.

### [A PAIR OF INNER UPPER INCLINED SECTIONS]

The pair of inner edges 258 include a pair of respective inner upper inclined sections 262. The pair of inner upper inclined sections 262 are closer to each other at respective points higher from the pair of separated inner ends 260. The top point of the inner upper inclined section 262 is higher than the highest portion of the lid 240.

### [A PAIR OF INNER LOWER INCLINED SECTIONS]

The pair of inner edges 258 include a pair of inner lower inclined sections 264. The pair of inner lower inclined sections 264 are closer to each other at respective points lower from the pair of separated inner ends 260. The inner lower inclined section 264 is opposed to, may be parallel to, or may be non-parallel to the outer edge 246 of the lid 240. The bottom point of the inner upper inclined section 262 is lower than the lowest part of the lid 240.

The outer shape of the light-emitting surface 256 has an inward lower edge 272 connecting the pair of inner edges 258 under the lid 240. The inward lower edge 272 may have a shape consisting of some straight lines or another shape corresponding to the lower edge 244 of the lid 240 (e.g. a shape consisting of an edge parallel to the lower edge 244).

The outer shape of the light-emitting surface 256 has a pair of second outer edges 266. Each of the pair of second outer edges 266 is convex in a direction (outward direction) corresponding to a corresponding one of the pair of inner edges 258. Specifically, the second outer edge 266 has a shape extending along the inner upper inclined section 262 and the inner lower inclined section 264 of the inner edge 258. The second outer edge 266 may have a shape with an edge parallel to at least one of the inner upper inclined section 262 and the inner lower inclined section 264.

The top point of the second outer edge 266 is higher than the highest portion of the lid 240. A second upper edge 268 connecting the inner edge 258 and the second outer edge 266 slopes upward and outward (direction away along the vehicle width direction). The bottom point of the second outer edge 266 is lower than the lowest part of the lid 240. A second lower edge 270 connecting the pair of second outer edges 266 may include an edge parallel to or non-parallel, as shown in FIG. 4, to the inward lower edge 272.

## Claims

1. An electric saddled vehicle comprising:
a drive motor (24);
a battery (28) configured for supplying power to the drive motor (24);
a charge connector (30) configured for charging the battery (28);
a front cowl (34) in which the charge connector (30) is disposed, the front cowl (34) having an inclined area (36) that slopes down with regards to a vehicle upper and
lower directions and forward with regards to a vehicle forward direction in an external
surface, the front cowl (34) having an aperture (38) in the inclined area (36); the electric saddled vehicle being **characterized by**:
a lid (40) attached to the front cowl (34) to allow opening and closing of the aperture (38), the lid (40) having an outer shape with a pair of outer edges (46) spaced in a vehicle width direction with the aperture (38) closed, the pair of outer edges (46) including a pair of separated outer ends (48) farthest in the vehicle width direction, the pair of outer edges (46) including a pair of outer lower inclined sections (52) closer to each other at respective points lower from the pair of separated outer ends (48) with regards to the vehicle upper and lower directions; and
a light (54) having a light-emitting surface (56) in the inclined area (36) of the front cowl (34), the light-emitting surface (56) having an outer shape with a pair of inner edges (58) opposed to the pair of outer edges (46) with regards to the vehicle width direction, the pair of inner edges (58) including a pair of separated inner ends (60) farthest in the vehicle width direction, the pair of inner edges (58) including a pair of inner lower inclined sections (64) closer to each other at respective points lower from the pair of separated inner ends (60) with regards to the vehicle upper and lower directions.

2. The electric saddled vehicle according to claim 1, wherein the pair of outer edges (46) of the lid (40) are a pair of protruding edges convex in a vehicle outward direction,
and
the pair of inner edges (58) of the light-emitting surface (56) are a pair of depressed edges concave in the vehicle outward direction.

3. The electric saddled vehicle according to claim 1 or 2, wherein the lid (40) overlaps with a line segment (LS) with regards to the vehicle forward-backward direction between a top point and a bottom point of each of the pair of inner edges (58) with regards to the vehicle upper and lower directions.

4. The electric saddled vehicle according to any one of claims 1 to 3, wherein the light-emitting surface (56) includes a first light-emitting surface (56A) and a second light-emitting surface (56B) separated from each other, and
the pair of inner edges (58) are a first inner edge (58A) of the first light-emitting surface (56A) and a second inner edge (58B) of the second light-emitting surface (56B).

5. The electric saddled vehicle according to any one of claims 1 to 3, wherein the outer shape of the light-emitting surface (256) is a continuously integrated shape surrounding the lid (240) laterally beside and under the lid (240).

6. The electric saddled vehicle according to any one of claims 1 to 5, wherein the pair of inner edges (58) of the light-emitting surface (56) include a pair of inner upper inclined sections (62) closer to each other at respective points higher from the pair of separated inner ends (60) with regards to the vehicle upper and lower directions.

7. The electric saddled vehicle according to claim 6, wherein each of the pair of inner upper inclined sections (62) of the light-emitting surface (56) has a top point lower than the highest portion of the lid (40) with regards to the vehicle upper and lower directions.

8. The electric saddled vehicle according to claim 6, wherein each of the pair of inner upper inclined sections (262) of the light-emitting surface (256) has a top point higher than the highest portion of the lid (240) with regards to the vehicle upper and lower directions.

9. The electric saddled vehicle according to any one of claims 1 to 8, wherein the pair of outer edges (46) of the lid (40) include a pair of outer upper inclined sections (50) closer to each other at respective points higher from the pair of separated outer ends (48) with regards to the vehicle upper and lower directions.

10. The electric saddled vehicle according to any one of claims 1 to 9, wherein the light (54) is a daytime running light.

11. The electric saddled vehicle according to any one of claims 1 to 10, wherein the lid (40) is capable of remote operation of being locked and unlocked.

12. The electric saddled vehicle according to any one of claims 1 to 11, wherein the light (54) is configured to be on or blink during a predetermined period including time of charging the battery (28).

## Patentansprüche

1. Ein Elektro-Sattel-Fahrzeug, das umfasst:
einen Antriebsmotor (24);
eine Batterie (28), die für die Zuführung von Leistung zu dem Antriebsmotor (24) konfiguriert ist;
einen Lade-Verbinder (30), der zum Laden der Batterie (28) konfiguriert ist;
eine Vorder-Verkleidung (34), in welcher der Lade-Verbinder (30) angeordnet ist, die Vorder-Verkleidung (34) weist einen geneigten Bereich (36) auf, der in Bezug auf eine obere und untere Richtung des Fahrzeugs nach unten und in Bezug auf eine vorwärtige Richtung des Fahrzeugs in einer Außenfläche nach vorne geneigt ist, die Vorder-Verkleidung (34) weist eine Öffnung (38) in dem geneigten Bereich (36) auf;
das Elektro-Sattel-Fahrzeug ist **gekennzeichnet durch**:
einen Deckel (40), der an der Vorder-Verkleidung (34) angebracht ist, um das Öffnen und Schließen der Öffnung (38) zu ermöglichen, der Deckel (40) weist eine äußere Form mit einem Paar Außen-Kanten (46) auf, die in einer Fahrzeug-Breiten-Richtung beabstandet sind, wenn die Öffnung (38) geschlossen ist, das Paar Außen-Kanten (46) beinhaltet ein Paar getrennter Außen-Enden (48), die in der Fahrzeug-Breiten-Richtung am weitesten entfernt sind, das Paar der Außen-Kanten (46) beinhaltet ein Paar äußerer unterer geneigter Abschnitte (52), die an jeweiligen Punkten, die in Bezug auf die obere und untere Richtung des Fahrzeugs unterhalb des Paars getrennter Außen-Enden (48) liegen, näher beieinander liegen und
eine Leuchte (54), die eine lichtemittierende Fläche (56) in dem geneigten Bereich (36) der Vorder-Verkleidung (34) hat, die lichtemittierende Fläche (56) hat eine Außen-Form mit einem Paar Innen-Kanten (58), die dem Paar von Außen-Kanten (46) in Bezug auf die Fahrzeug-Breiten-Richtung gegenüberliegen, das Paar von Innen-Kanten (58) beinhaltet ein Paar getrennter Innen-Enden (60), die in Fahrzeug-Breiten-Richtung am weitesten entfernt sind, das Paar von Innen-Kanten (58) beinhaltet ein Paar innerer unterer geneigter Abschnitte (64), die an jeweiligen Punkten, die in Bezug auf die obere und untere Richtung des Fahrzeugs unter dem Paar getrennter Innen-Enden (60) liegen, näher beieinander liegen.

2. Das Elektro-Sattel-Fahrzeug nach Anspruch 1, wobei das Paar von Außen-Kanten (46) des Deckels (40) ein Paar von vorstehenden Kanten ist, die in einer Fahrzeug-Auswärts-Richtung konvex sind, und
das Paar Innen-Kanten (58) der lichtemittierenden Fläche (56) ein Paar vertiefte Kanten sind, die in der Fahrzeug-Auswärts-Richtung konkav sind.

3. Das Elektro-Sattel-Fahrzeug nach Anspruch 1 oder 2, wobei der Deckel (40) sich mit einem Linien-Segment (LS) in Bezug auf die Vorwärts-Rückwärts-Richtung des Fahrzeugs zwischen einem oberen Punkt und einem unteren Punkt jedes der beiden Innen-Kanten (58) in Bezug auf die obere und untere Richtung des Fahrzeugs überlappt.

4. Das Elektro-Sattel-Fahrzeug nach irgendeinem der Ansprüche 1 bis 3, wobei die lichtemittierende Fläche (56) eine erste lichtemittierende Fläche (56A) und eine zweite lichtemittierende Fläche (56B) beinhaltet, die voneinander getrennt sind, und das Paar von Innen-Kanten (58) eine erste Innen-Kante (58A) der ersten lichtemittierenden Fläche (56A) und eine zweite Innen-Kante (58B) der zweiten lichtemittierenden Fläche (56B) sind.

5. Das Elektro-Sattel-Fahrzeug nach irgendeinem der Ansprüche 1 bis 3, wobei die Außen-Form der lichtemittierende Fläche (256) eine durchgehend integrierte Form ist, die den Deckel (240) seitlich neben und unter dem Deckel (240) umgibt.

6. Das Elektro-Sattel-Fahrzeug nach irgendeinem der Ansprüche 1 bis 5, wobei das Paar Innen-Kanten (58) der lichtemittierenden Fläche (56) ein Paar innerer oberer geneigter Abschnitte (62) beinhaltet, die an jeweiligen Punkten, die höher als das Paar getrennter Innen-Enden (60) liegen, in Bezug auf die obere und untere Richtung des Fahrzeugs näher beieinander liegen.

7. Das Elektro-Sattel-Fahrzeug nach Anspruch 6, wobei jeder der beiden inneren oberen geneigten Abschnitte (62) der lichtemittierende Fläche (56) einen oberen Punkt hat, der niedriger liegt als der höchste Abschnitt des Deckels (40) in Bezug auf die obere und untere Richtung des Fahrzeugs.

8. Das Elektro-Sattel-Fahrzeug nach Anspruch 6, wobei jeder der beiden inneren oberen geneigten Abschnitte (262) der lichtemittierende Fläche (256) einen oberen Punkt hat, der höher liegt als der höchste Abschnitt des Deckels (240) in Bezug auf die obere und untere Richtung des Fahrzeugs.

9. Das Elektro-Sattel-Fahrzeug nach irgendeinem der Ansprüche 1 bis 8, wobei das Paar von Außen-Kanten (46) des Deckels (40) ein Paar äußerer oberer geneigter Abschnitte (50) beinhaltet, die an entsprechenden Punkten, die höher liegen als das Paar getrennter Außen-Enden (48), in Bezug auf die obere und untere Richtung des Fahrzeugs näher beieinander liegen.

10. Das Elektro-Sattel-Fahrzeug nach irgendeinem der Ansprüche 1 bis 9, wobei die Leuchte (54) ein Tag-Fahr-Licht ist.

11. Das Elektro-Sattel-Fahrzeug nach irgendeinem der Ansprüche 1 bis 10, wobei der Deckel (40) ferngesteuert ver- und entriegelt werden kann.

12. Das Elektro-Sattel-Fahrzeug nach irgendeinem der Ansprüche 1 bis 11, wobei die Leuchte (54) so konfiguriert ist, dass sie während eines vorbestimmten Zeitraums, der die Zeit des Ladens der Batterie (28) einschließt, leuchtet oder blinkt.

## Revendications

1. Véhicule électrique à selle comprenant :
un moteur d'entraînement (24) ;
une batterie (28) configurée pour fournir de l'énergie au moteur d'entraînement (24) ;
un connecteur de charge (30) configuré pour charger la batterie (28) ;
un capot avant (34) dans lequel est disposé le connecteur de charge (30), le capot avant (34) ayant une zone inclinée (36) qui s'incline vers le bas par rapport à des directions supérieure et inférieure du véhicule et vers l'avant par rapport à une direction avant du véhicule dans une surface externe, le capot avant (34) ayant une ouverture (38) dans la zone inclinée (36) ;
le véhicule électrique à selle étant **caractérisé par** :
un couvercle (40) fixé au capot avant (34) pour permettre l'ouverture et la fermeture de l'ouverture (38), le couvercle (40) ayant une forme extérieure avec une paire de bords extérieurs (46) espacés dans la direction de la largeur du véhicule avec l'ouverture (38) fermée, la paire de bords extérieurs (46) comprenant une paire d'extrémités extérieures séparées (48) les plus éloignées dans la direction de la largeur du véhicule, la paire de bords extérieurs (46) comprenant une paire de sections inclinées inférieures extérieures (52) plus proches l'une de l'autre au niveau de points respectifs inférieurs à la paire d'extrémités extérieures séparées (48) par rapport aux directions supérieure et inférieure du véhicule ; et
un feu (54) ayant une surface électroluminescente (56) dans la zone inclinée (36) du capot avant (34), la surface électroluminescente (56) ayant une forme extérieure avec une paire de bords intérieurs (58) opposés à la paire de bords extérieurs (46) par rapport à la direction de la largeur du véhicule, la paire de bords intérieurs (58) comprenant une paire d'extrémités intérieures séparées (60) les plus éloignées dans la direction de la largeur du véhicule, la paire de bords intérieurs (58) comprenant une paire de sections inclinées inférieures intérieures (64) plus proches l'une de l'autre au niveau de points respectifs inférieurs à la paire d'extrémités intérieures séparées (60) par rapport aux directions supérieure et inférieure du véhicule.

2. Véhicule électrique à selle selon la revendication 1, dans lequel la paire de bords extérieurs (46) du couvercle (40) est une paire de bords en saillie convexes dans une direction extérieure du véhicule, et
la paire de bords intérieurs (58) de la surface électroluminescente (56) est une paire de bords en dépression concaves dans la direction extérieure du véhicule.

3. Véhicule électrique à selle selon la revendication 1 ou 2, dans lequel le couvercle (40) chevauche un segment de ligne (LS) par rapport à la direction avant-arrière du véhicule entre un point haut et un point bas de chacun de la paire de bords intérieurs (58) par rapport aux directions supérieure et inférieure du véhicule.

4. Véhicule électrique à selle selon l'une quelconque des revendications 1 à 3, dans lequel la surface électroluminescente (56) comprend une première surface électroluminescente (56A) et une deuxième surface électroluminescente (56B) séparées l'une de l'autre, et
la paire de bords intérieurs (58) est un premier bord intérieur (58A) de la première surface électroluminescente (56A) et un deuxième bord intérieur (58B) de la deuxième surface électroluminescente (56B).

5. Véhicule électrique à selle selon l'une quelconque des revendications 1 à 3, dans lequel la forme extérieure de la surface électroluminescente (256) est une forme intégrée en continu entourant le couvercle (240) latéralement à côté et sous le couvercle (240).

6. Véhicule électrique à selle selon l'une quelconque des revendications 1 à 5, dans lequel la paire de bords intérieurs (58) de la surface électroluminescente (56) comprend une paire de sections inclinées supérieures intérieures (62) plus proches l'une de l'autre au niveau de points respectifs plus élevés que la paire d'extrémités intérieures séparées (60) par rapport aux directions supérieure et inférieure du véhicule.

7. Véhicule électrique à selle selon la revendication 6, dans lequel chacune de la paire de sections inclinées supérieures intérieures (62) de la surface électroluminescente (56) a un point haut inférieur à la partie la plus élevée du couvercle (40) par rapport aux directions supérieure et inférieure du véhicule.

8. Véhicule électrique à selle selon la revendication 6, dans lequel chacune de la paire de sections inclinées supérieures intérieures (262) de la surface électroluminescente (256) a un point haut plus élevé que la partie la plus élevée du couvercle (240) par rapport aux directions supérieure et inférieure du véhicule.

9. Véhicule électrique à selle selon l'une quelconque des revendications 1 à 8, dans lequel la paire de bords extérieurs (46) du couvercle (40) comprend une paire de sections inclinées supérieures extérieures (50) plus proches l'une de l'autre au niveau de points respectifs plus élevés que la paire d'extrémités extérieures séparées (48) par rapport aux directions supérieure et inférieure du véhicule.

10. Véhicule électrique à selle selon l'une quelconque des revendications 1 à 9, dans lequel le feu (54) est un feu de circulation de jour.

11. Véhicule électrique à selle selon l'une quelconque des revendications 1 à 10, dans lequel le couvercle (40) peut être actionné à distance pour être verrouillé et déverrouillé.

12. Véhicule électrique à selle selon l'une quelconque des revendications 1 à 11, dans lequel le feu (54) est configuré pour être allumé ou pour clignoter pendant une période prédéterminée comprenant le temps de charge de la batterie (28).
